# EUROPEAN PATENT APPLICATION

(11) **EP 4 571 937 A1**
(43) Date of publication of application: **18.06.2025**
(21) Application number: 23215871.7
(22) Date of filing: 12.12.2023
(51) Int. Cl.: H01M 10/613, H01M 10/615, H01M 10/643, H01M 10/654, H01M 10/6556, H01M 50/107, H01M 50/152, H01M 10/6567

(54) **BATTERY CELL WITH ACTIVE COOLING, INTERMEDIATE PIECE, BATTERY CELL SYSTEM AND METHOD FOR MANUFACTURING A BATTERY CELL**

(71) Applicant: Customcells Holding GmbH, 25524 Itzehoe (DE)
(72) Inventor: De Righetti, Philip, Itzehoe (DE)
(74) Representative: LKGLOBAL Lorenz & Kopf Patentanwalt Attorney at Law PartG mbB

(57) **Abstract**

A first aspect of the present disclosure is related to a battery cell, comprising:
- a housing;
- an electrode stack arranged in the housing;
wherein the housing comprises a channel configured to comprise a fluid for cooling and/or heating the electrode stack.

## Description

### Technical field

This disclosure is related to battery cells, battery cell systems comprising one or more of the battery cells. Furthermore, intermediate pieces are disclosed for application in a battery cell system. Methods for manufacturing a battery cell are also disclosed.

### Background

Systems with a plurality of battery cells are organized to optimize performance, lifespan, and safety. These cells are often connected in series, parallel, or a combination of both, forming battery cell systems. Series connections increase the voltage while maintaining the same current capacity, whereas parallel connections increase current capacity while keeping voltage constant. Battery cell systems can be configured to monitor and control various states and condition of their batteries. Inadequate cooling or uneven temperature distribution across a battery cell system can affect important battery characteristics such as storage capacity, power provision rate, or life span. Improvement in this field is desirable.

### Summary

An object of the present disclosure is to provide a battery cell system with an improved temperature management.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a battery cell, comprising:
- a housing;
- an electrode stack arranged in the housing;
wherein the housing comprises a channel configured to comprise a fluid for cooling and/or heating the electrode stack.

A battery cell can be any type of battery cell that is equipped with a cooling/heating channel. A battery cell can be round (cylindrical, oval, etc.). A battery cell can also be a prismatic battery cell. A battery cell can even be a cell with a housing comprising a pouch foil.

A housing can be a rigid can. A can is the outer shell or casing of the battery. It can act as a container for the internal components, such as the cathode, anode, separator, and electrolyte, and can provide structural integrity to the battery. The can can also serve as one of the electrical contacts, usually the negative terminal. The can can be formed round, prismatic, or custom-made. Cylindrical cells, like the widely used 18650 or 21700 cells, can have a cylindrical can. The can may be made of metal, such as steel or aluminum, to provide a robust and durable enclosure and to efficiently conduct electricity.

An electrode stack can be arranged in the housing as a wound-up or layered electrode stack. An electrode stack comprises a cathode layer and an anode layer that are divided by a separator. The electrode stack comprises an electrolyte or is drenched in an electrolyte, e.g. after being arranged in the housing. Furthermore, the electrode stack comprises current collectors (also called "tabs") for each electrode that are connected to the poles of the battery.

A fluid for heating or cooling can be any substance that can transfer heat from one area to another. A fluid can be in liquid or gas form. A fluid can, e.g., be water, in particular distilled water, which is electrically isolating. Additionally or alternatively, a fluid can be refrigerant such as used in air conditioning and refrigeration systems. Refrigerants can comprise chlorofluorocarbons and/or hydrofluorocarbons, such as "Freon". Additionally or alternatively, a fluid can be a (mineral) oil. Additionally or alternatively, a fluid can be a synthetic fluids, such as polyalphaolefins, glycols (like ethylene glycol and propylene glycol), and silicones-based fluids. Additionally or alternatively, a fluid can comprise a gas like air, helium, and/or nitrogen. Gaseous fluids can be used in particular if liquid fluids are impractical, e.g. corrosive.

Cooling and/or heating can take place by the fluid in the way of conduction. Thereby, the heat transfer is caused by the direct contact of the fluid to the channel, which is cooler or hotter than the fluid because of the surrounding batteries, which have transferred their heat to the material of the channel. In order to effectively absorb the temperature of the batteries, the channel can be formed of a heat-conductive material.

A channel can be formed as a pipe, a cane, a cylinder, and/or a tube. In particular channel can be formed as a part of a housing or of a lid to be placed on a housing. A channel can comprise one or more metals. A channel can comprise silver and/or gold, which are one of the most thermally conductive materials. For example, a channel can be coated with silver and/or gold. Additionally or alternatively, a channel can comprise copper, which has similar properties of silver at lower costs. Additionally or alternatively, a channel can comprise aluminum, in particular for its good thermal conductivity and its low specific weight. A channel can comprise carbon-based materials, such as graphite and/or graphene, which can provide a high thermal conductivity and a low specific weight. A channel can also comprise or be formed of ceramics. For example, boron nitride exhibits high thermal conductivity. For example, aluminum nitride offers high thermal conductivity and is electrically insulating. Channel materials are disclosed in the context of the fourth aspect of the invention.

Cooling and/or heating can also take place by the fluid in the way of convection. The liquid can absorb and/or dissipates heat as it circulates through the battery cell. In a heating function, the liquid absorbs heat from an external radiator and transfers into the battery cell or battery cell system. In a cooling function, the liquid absorbs heat from the battery cell over the channel and carries it away to be released outside. Therefore, the battery cell can be configured to be connected to respective heat sources or heat sinks. Furthermore, the battery cell can be configured to be connected to a means to move the fluid through the channel, such as a pump or a blower. A heat sink or a heat source can be part of a battery cell system that comprises one or more batteries and a fluid that is moved through the channel of the batteries.

By a battery cell of the first aspect and/or a battery cell system that comprises one or more battery cells of the first aspect, a battery with an improved temperature management is provided.

An embodiment of the first aspect of the present disclosure is related to a battery cell,
wherein the channel is formed in the electrode stack arranged in the housing, in particular in a center of the electrode stack.

A channel can be formed around the battery stack. Thereby it can transfer heat from or to the outer sides of the battery stack. Additionally or alternatively, a channel can be formed within a battery stack. Therefore, the battery stack needs to be wound-up, folded or stacked such that it comprises one or more cavities to host a channel for heat exchange. For example, in a wound-up or folded battery stack such as used e.g. for cylindrical cells, a channel can be formed in one or more centers of the battery stack. Or in other words, the battery stack can be formed around the channel. In this way, thermal energy can be transferred from or to the inner of the electrode stack of a battery cell.

An embodiment of the first aspect of the present disclosure is related to a battery cell,
wherein the channel is formed to lead the fluid such that it enters the housing on a first side and exists the housing on a second side.

In one simple example, a channel is formed axially and in the center of a cylindrical battery cell. Then, the channel can be formed as a straight tube that goes from one end of the battery cell to the opposite end of the battery cell. The fluid can be moved (e.g. by a pump, a blower, or by convection) from one side of the battery cell where it enters the battery cell channel to other side of the battery cell. In this way, the fluid is moved along the whole inner side of the battery cell and can provide heat exchange to an area where heat is dissipated significantly during energy provision and/or where a certain temperature is needed to optimally operate the battery cell.

An embodiment of the first aspect of the present disclosure is related to a battery cell,
wherein the channel is formed to lead the fluid such that it enters the housing on a first side and exits the housing on the same first side.

For example, in a cylindrical battery cell, a fluid channel can be formed similarly to the fluid channel above in the center of the electrode stack and through the whole electrode stack. However, in difference to the preceding example, the channel as no exit at the opposite side. However, in this example, the channel is formed with two subchannels (partitions). A fluid enters a first subchannel on the top of the battery cell and flows along this subchannel to the bottom of the battery cell. As in the preceding example, the fluid can exchange heat with the whole inner side of the battery cell. At the bottom, the fluid does not exit the battery cell, but is guided back to the top of the battery cell through the second subchannel and it exists the battery cell at the top of the battery cell. In a more complex example, a channel can be formed as a meander through the battery stack.

An embodiment of the first aspect of the present disclosure is related to a battery cell,
wherein the channel has a polygon form.

A channel can be formed such that a stacking of cells and/or a connection to a heat source and/or a heat sink can be performed in a standardized way, in particular with the correct orientation. Therefore, a beginning and/or an ending of a channel can have a specific form. For example, in order to stack batteries according to a desired electrical connection (plus pole to plus pole or plus pole to minus pole), the beginning of channel (e.g. on a plus pole side of a battery cell) can have a different form as the end of the channel (e.g. on the opposite minus pole side). In this way it can be guaranteed that the battery cells are stacked correctly to one another.

An embodiment of the first aspect of the present disclosure is related to a battery cell,
comprising a lid that is configured to lead through the fluid.

A lid can be formed such that a further battery can be stack to the battery cell. Additionally or alternatively, a lid can be formed such that it forms an end of a channel that consists of two or more subchannels such that a fluid can enter and exit the battery cell on the same side, i.e. over the same lid.

An embodiment of the first aspect of the present disclosure is related to a battery cell,
wherein the lid is configured to connect the battery cell to second battery cell and to provide the fluid between the battery cell and the second battery cell.

A lid can be formed such that a further battery and/or heat sinks/sources can be connected to the battery cell.

An embodiment of the first aspect of the present disclosure is related to a battery cell,
wherein the lid is configured such that the second battery cell can be stacked on the battery cell in a pre-defined orientation, in particular by a polygon-shape.

A lid can be formed such that a further battery and/or heat sinks/sources can be connected to the battery cell in a desired way or orientation and to prevent non-intended connections.

An embodiment of the first aspect of the present disclosure is related to a battery cell,
wherein the lid comprises a channel configured to lead the fluid along the side of the lid along the electrode stack.

By leading a fluid along the side of an electrode stack and in particular also within the electrode stack, an effective cooling/heating can be achieved.

A second aspect of the present disclosure is related to an intermediate piece for a battery cell system,
configured to connect two battery cells such that a fluid can be exchanged between the two battery cells.

The intermediate piece can also be used to connect a battery cell to an external heat sink and/or heat source for providing a heating fluid or a cooling fluid. Based on a plurality of intermediate pieces a battery cell system can be formed in which a plurality of battery cells are connected to a single fluid cooling/heating circuit. The intermediate piece can be, e.g., formed as a spacer.

An embodiment of the second aspect of the present disclosure is related to an intermediate piece for a battery cell system,
configured to connect the two batteries electrically.

Therefore the intermediate piece can have at least one electrically conductive connection that goes from one side of the intermediate piece that is configured to be connected with a first battery to the other side configured to be connected to a second battery. The intermediate piece can comprise a selector to select if the intermediate piece should be connected to a plus or minus pole of a battery that provides both poles on a single side. Of course, this can also be implemented by different types of intermediate pieces.

An embodiment of the second aspect of the present disclosure is related to an intermediate piece for a battery cell system,
configured to connect the two batteries mechanically.

The intermediate piece can be formed as a one-sided or two-sided socket. The socket is configured to mechanically support a connected battery cell which is connected to the intermediate piece by the socket.

An embodiment of the second aspect of the present disclosure is related to an intermediate piece for a battery cell system,
configured to be connected to the two batteries via a click mechanism for each battery.

A click mechanism can facilitate an assembly of a battery cell system with a plurality of batteries stacked together and connected to a cooling/heating circuit. Furthermore, a click mechanism provides a positive connection which connects the batteries to the intermediate piece safely. A click mechanism can comprise snap-fit joints. These can be plastic parts that feature protrusions (like hooks or beads) on one part (either the intermediate piece or the battery cell) that snap into a recess and/or undercut on the corresponding part (either the battery or the intermediate piece). Additionally or alternatively, a click mechanism can comprise bayonet mounts, that comprises aligning pins on one part with slots on the other and which have to be twisted to lock. Additionally or alternatively, a click mechanism can provide button locks. These typically comprise a button that, when pressed, retracts a pin or latch, allowing the two parts to be slid together or apart. Releasing the button locks the parts in place. Additionally or alternatively, a click mechanism can provide magnetic locks. Other connection types can also be envisaged.

A third aspect of the present disclosure is related to a battery cell system, comprising:
- a plurality of battery cells according to one or more of the preceding claims, wherein each battery is configured to contain a cooling and/or a heating fluid.

The batteries of the systems can be stacked directly to each other. Additionally or alternatively, the batteries of the system can be stacked to each other using an intermediate piece according to the second aspect of the present disclosure. The cooling/heating fluid can be part of a single cooling/heating circuit. Therefore, the system can comprise a heat sink and/or a heat source that are configured to heat or cool the fluid. In particular at a beginning of an operation the battery cells of the system can be heated in order to reach operation temperature without using internal energy for this. If a battery cell exceeds a pre-defined temperature or if a current it delivers increases a pre-defined threshold, a cooling can be started, and cooling fluid can be provided.

A fourth aspect of the present disclosure is related to a method for manufacturing a battery cell,
comprising the steps:
- forming a can with a channel configured to comprise a fluid;
- arranging an electrode stack in the can;
- closing and sealing the housing by a first lid on top and/or by a second lid on the bottom of the can, wherein at least one of the lids is configured to receive and/or dispense the fluid.

Channels for cooling or heating fluids can be formed by different processes. The method according to the fourth aspect can comprise a step to form a respective channel and a further step to arrange it in the battery.

Channels can be formed by assembling pre-made tubing or piping into the desired configuration. For materials like plastics or certain metals, a channel can be created through extrusion or molding processes. For materials like metal or dense plastics, channels can be mechanically machined using processes like drilling, milling, or CNC (Computer Numerical Control) machining. This allows for precise control over the size and shape of the channels. Channels made of metal can be produced by casting, by welding or by bonding flat sheets or other shapes together. For example, metal plates with grooves can be welded together, or layers of material can be bonded to form channels in between them. Channels can also be formed by additive manufacturing processes such as 3D printing. Such channels can comprise complicated geometries like meandering channels or channels with subchannels for moving a fluid to an end of an electrode stack and back to its beginning. In particular, a channel can be formed as a part of a housing or of a lid to be placed on a housing.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates an electrode stack of a battery cell according to an embodiment of the present disclosure.
Fig. 2 illustrates a battery cell according to an embodiment of the present disclosure.
Fig. 3 illustrates an electrode stack for a battery cell according to an embodiment of the present disclosure.
Fig. 4 illustrates a lid for a battery cell according to an embodiment of the present disclosure.
Fig. 5 illustrates an intermediate piece for a battery system according to an embodiment of the present disclosure.
Fig. 6 illustrates an application for a battery system according to an embodiment of the present disclosure.
Fig. 7 illustrates a method for manufacturing a battery cell according to an embodiment of the present disclosure.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

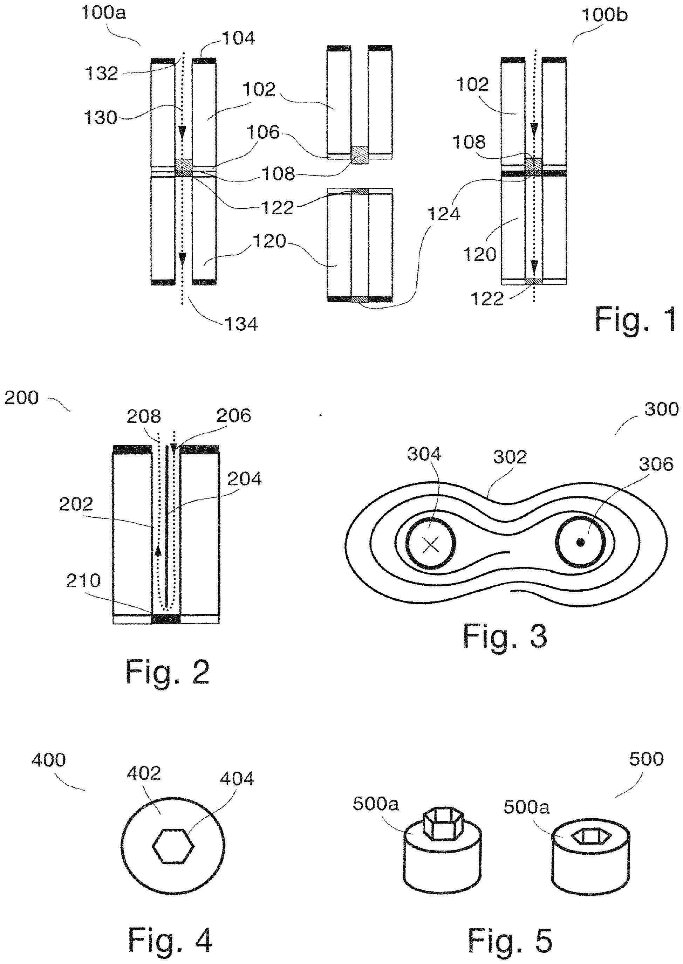

Fig. 1 illustrates two battery cell systems according to embodiments of the present disclosure and two battery cells according to embodiments of the present disclosure.

The first battery cell system 100a comprises is depicted on the left-hand side of the figure. In this battery cell system, two battery cells are stacked together in order to form a single cooling/heating circuit. An upper battery 102 is depicted in its cross-section. It has a first pole 104 on the top and a second pole 106 on the bottom. The battery cell 102 is depicted as such in the middle of the figure. It is a circular battery with an electrode stack arranged around the channel.

In the battery cell system depicted on the left-hand side, the upper battery cell 102 is connected to a lower battery cell 120. The lower battery is also a circular battery with an electrode stack arranged around the channel. Therefore, the upper battery 102 has a mechanical male stacking connection 108 at the minus-pole-side. This can e.g. be realized by a corresponding lid or by an opening in a battery housing/can. The male stacking connection 108 of the upper cell 102 is inserted into a corresponding mechanical female stacking connection 122 of the lower cell 120. In the battery cell system, i.e. when stacked together, the battery cells 102, 120 form a common fluid channel 130. The fluid channel starts at the top 132 of the upper cell 102 and it ends at the bottom 134 of the lower cell 120. The fluid can run to the channel, e.g. from the top 132 to the bottom 134. In the battery cell system depicted on the left-hand side, the batteries are stack together such that the minus poles of the two battery cells are electrical connected, which is required for a parallel connection. Such a connection can be chosen to provide a certain current capacity of the battery cell system.

In the battery cell system 100b depicted on the right hand side, the batteries are stacked together such that the minus pole of the upper battery cell 102 is electrical connected via the male connector 108 to the plus pole of the lower battery cell 120 via the female connector 124, which yields a serial connection of the two power sources. Such a connection can be chosen to provide a certain voltage capacity of the battery cell system. In order to provide the flexibility to provide a battery cell system for parallel or for serial connections the lower battery cell 120 has two female connectors 122, 124, each on every side of the battery cell.

The fluid channels of the battery cell systems can be connected to a heat sink or a heat source, depending on whether a cooling or a heating is desired. To move the fluid through the battery cell systems, they can comprise a corresponding actuator, e.g. a pump (if the fluid is a liquid) and/or a blower (if the fluid is a gas).

Fig. 2 illustrates a battery cell according to an embodiment of the present disclosure. The battery cell 200 is depicted in its cross section. It comprises a fluid channel 202 which is separated into two parts. Therefore, the channel comprises a partitioning wall 204 arranged in the middle of the channel. A fluid can enter the battery cell at the opening 206 of the channel and flow to the bottom of the cell in the forward partition of the channel 202. At the bottom of the battery cell it is reflected into the other channel partition by the seal or lid 210 to flow back to the top of the battery cell. The fluid can leave the battery cell on the same side at the exit 208 of the channel.

Not depicted, with minor modifications, the battery cell 200 can be configured to be stacked similar to the battery cells shown in Fig. 1. Therefore, at least two battery cells with a partitioned channel need to be configured such that they can be stacked together, e.g. with a male/female connection as depicted in Fig.2. Furthermore, only the lower cell needs to have a seal 210. The upper cell needs to be connected to the lower cell such that the channel partitions match and the channel interface is sealed. Then a fluid can enter the upper battery as depicted in Fig. 2 and flow into the corresponding channel partition of the lower cell. After being reflected by the seal 210 in the lower cell, the fluid returns in the backward partition of the channel such that it exits the upper battery cell as depicted in Fig. 2.

Fig. 3 illustrates an electrode stack with a fluid channel 300 for a battery cell according to an embodiment of the present disclosure. The electrode stack 300 is depicted in a cross section. It comprises an anode and a cathode layer which are separated by separator layer (the layers are not shown individually) and is wound up around two parts of a channel system. In the first part 304 of the channel system a fluid can flow in one direction. In a second part 306 of the channel system the fluid can flow in the opposite direction. The fluid enters and exits the electrode stack at the same side. The electrode stack is nudged around the fluid channel parts 304, 306 to increase a thermal energy exchange. Such a cooling/heating architecture can be, e.g., used for battery cell systems that need a high rate of cooling/heating.

Fig. 4 illustrates a lid for a battery cell or an opening of a battery cell according to an embodiment of the present disclosure. In general, connections to other batteries that comprise an interface for a common fluid channel can be realized by a lid or an appropriately designed top or bottom side of the battery cell. A lid or an opening 400 of a battery cell can have a circular form 402. In the middle of a lid a male and/or female interface 404 can be arranged. The interface can be formed as a polygon, in particular a non-symmetrical polygon, to assure a connection of the two battery cells in a desired angular or axial orientation. A desired angular orientation in the sense of the application means that two stacked battery cells are aligned correctly along their middle axis and not twisted. A desired axial orientation means that the plus-pole side or the minus-pole side should be connected to the other battery cell. Both alignments can be assured by a an appropriately shaped form 404.

Fig. 5 illustrates two intermediate pieces for a battery system according to an embodiment of the present disclosure. Additionally or alternatively to an appropriately designed lid or opening (cf. Fig. 4) an interface for connection of two batteries with a common fluid channel can also be realized by an intermediate piece that neither belongs to the upper or lower battery. The intermediate piece 500 is shown from the top and from the bottom. On the top side 500a, the intermediate piece comprises a male connector with a polygon. On the bottom side 500b, the intermediate piece comprises a female connector. In this configuration, a battery cell with a male connector can be attached to the bottom side 500b of the intermediate piece 500 and a battery cell with a female connector can be attached to the top side 500a of the intermediate piece, thereby realizing a common fluid channel for cooling/heating the battery cell system. Other architectures are of course possible.

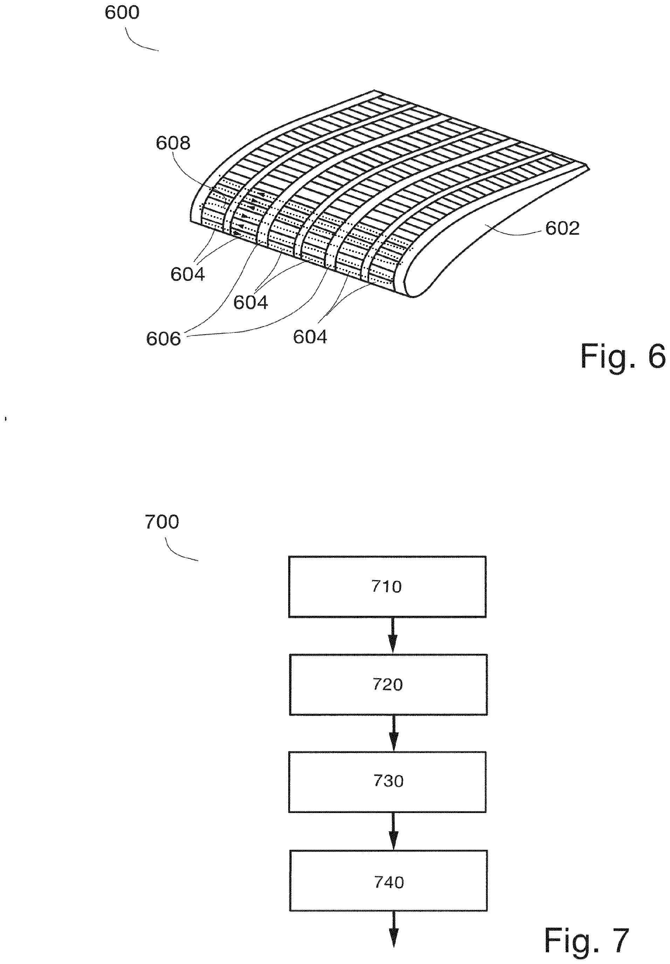

Fig. 6 illustrates an application for a battery system according to an embodiment of the present disclosure in an airfoil-hosted battery cell system 600 of a plane. Round cells with an outer diameter of 46mm are currently establishing themselves as the new standard for round cells. This means that the exterior is relatively fixed. On the inside of the cell, in the choice of materials and in the manufacturing processes, there are still many degrees of freedom. For the aviation sector, cells are being considered as a possible energy storage system. Here, a well-tempered cell is important for safe flying - whether cooling or heating the cell. Three couples of stacked batteries 604 are comprised by the battery cell system. They are arranged horizontally in an airfoil 602. The stacked batteries 604 are connected via appropriate openings in a serial connection to each other and form a common fluid channel (e.g. as depicted in Fig. 1). Furthermore, the battery couples 604 are connected via appropriate intermediate pieces 606 to form a common channel through all batteries. Thereby, a fluid 608 can be moved cooling/heating all batteries in the airfoil using a single heat sink and/or heat source (not depicted).

Fig. 7 illustrates a method 700 for manufacturing a battery cell according to an embodiment of the present disclosure. In a first step 710, a housing is formed with a channel. The channel needs not necessarily be of the same material as the housing. And it can be attached to the channel, e.g. by crimping and/or welding. After the housing is formed an electrode stack is arranged in the housing. The electrode stack can be arranged around the channel in step 720. The electrode stack can be inserted into the housing together with the channel in step 730. Alternatively, the electrode stack can be inserted in the housing after the channel has been arranged. In a last step 740, the housing is closed and sealed by a first lid on top and/or by a second lid on the bottom of the can. At least one of the lids is configured to receive and/or dispense the fluid for cooling/heating the battery cell.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100a: battery cell system
- 100b: battery cell system
- 102: cross section of upper battery cell
- 104: plus pole
- 106: minus pole
- 108: male connection
- 120: cross section of lower battery cell
- 122: female stacking connection
- 130: channel
- 132: start of channel
- 134: end of the channel
- 200: battery cell
- 202: fluid channel
- 204: partitioning wall
- 206: entering fluid
- 208: exiting fluid
- 210: seal
- 300: electrode stack with channel
- 304: first part of channel system
- 306: second part of channel system
- 400: lid or opening
- 402: circular form
- 404: interface
- 500: intermediate piece
- 500a: top side
- 500b: bottom side
- 600: battery cell system
- 602: airfoil
- 604: stacked batteries
- 606: intermediate pieces
- 608: flow direction
- 700: manufacturing method
- 710: forming a housing
- 720: arranging channel in electrode stack
- 730: arranging electrode stack in housing
- 740: arranging lid on housing

## Claims

1. A battery cell for storing electrical energy,
comprising:
- a housing (102);
- an electrode stack (102) arranged in the housing;
wherein the housing comprises a channel (130) configured to comprise a fluid for cooling and/or heating the electrode stack.

2. The battery cell according to the preceding claim,
wherein the channel (130) is formed in the electrode stack (102) arranged in the housing, in particular in a center of the electrode stack.

3. The battery cell according to one of the preceding claims,
wherein the channel (130) is formed to lead the fluid such that it enters the housing on a first side (104) and exists the housing on a second side (106).

4. The battery cell according to one of the preceding claims,
wherein the channel (130) is formed to lead the fluid such that it enters the housing on a first side (206) and exits the housing on the same first side (208).

5. The battery cell according to one of the preceding claims,
wherein the channel (130) has a polygon form (404).

6. The battery cell according to one of the preceding claims,
comprising a lid (400) that is configured to lead through the fluid.

7. The battery cell according to the preceding claim,
wherein the lid (400) is configured to connect the battery cell (102) to second battery cell (120) and to provide the fluid between the battery cell and the second battery cell.

8. The battery cell according to one of the two preceding claims,
wherein the lid (400) is configured such that the second battery cell (120) can be stacked on the battery cell (102) in a pre-defined orientation, in particular by a polygon-shape (404).

9. The battery cell according to one of the preceding three claims,
wherein the lid comprises a channel configured to lead the fluid along the side of the lid along the electrode stack.

10. An intermediate piece (500) for connection to a battery cell,
configured to connect two battery cells such that a fluid can be exchanged between the two battery cells.

11. The intermediate piece (500) according to the preceding claim,
configured to connect the two batteries electrically.

12. The intermediate piece (500) according to one of the two preceding claims,
configured to connect the two batteries mechanically.

13. The intermediate piece according to one of the three preceding claims, configured to be connected to the two batteries via a click mechanism for each battery.

14. A battery cell system,
comprising:
- a plurality of battery cells (102, 120) according to one or more of the preceding claims, wherein each battery is configured to contain a cooling and/or a heating fluid.

15. A method for manufacturing a battery cell,
comprising the steps:
- forming a can with a channel (130) configured to comprise a fluid;
- arranging an electrode stack in the can;
- closing and sealing the housing by a first lid on top and/or by a second lid on the bottom of the can, wherein at least one of the lids is configured to receive and/or dispense the fluid.
